# EUROPEAN PATENT SPECIFICATION

(11) **EP 3 488 653 B1**
(45) Date of publication and mention of the grant of the patent: **27.12.2023**
(21) Application number: 17746590.3
(22) Date of filing: 20.07.2017
(51) Int. Cl.: H04W 72/566

(54) **USER EQUIPMENT AND BASE STATIONS THAT TRANSCEIVE ULTRA RELIABLE LOW LATENCY MESSAGES AMIDST DELAY TOLERANT TRANSCEPTIONS**
BENUTZERGERÄT UND BASISSTATIONEN ZUM SENDEN-EMPFANGEN VON HOCHZUVERLÄSSIGEN NACHRICHTEN MIT NIEDRIGER LATENZ UNTER VERZÖGERUNGSTOLERANTEN SENDE-EMPFÄNGEN
ÉQUIPEMENT UTILISATEUR ET STATIONS DE BASE ÉMETTANT/RECEVANT DES MESSAGES ULTRA FIABLES À FAIBLE LATENCE PARMI DES ÉMISSIONS-RÉCEPTIONS TOLÉRANTES AU RETARD

(30) Priority: 21.07.2016 US 201662365187 P; 19.07.2017 US 201715654407
(43) Date of publication of application: 29.05.2019
(73) Proprietor: Sharp Kabushiki Kaisha, Sakai City, Osaka 590-8522 (JP); FG INNOVATION COMPANY LIMITED, New Territories, Hong Kong SAR (HK)
(72) Inventor: KOWALSKI, John Michael, Vancouver Washington 98684 (US); NOGAMI, Toshizo, Vancouver Washington 98684 (US); YIN, Zhanping, Vancouver Washington 98683 (US); SHENG, Jia, Vancouver Washington 98684 (US); ZHENG, Lizhong, Canton Massachusetts 02021 (US); YING, Kai, Vancouver Washington 98683 (US); PARK, Kenneth James, Cathlamet Washington 98612 (US)
(74) Representative: Müller Hoffmann & Partner
(86) International application number: PCT/US2017/043015
(87) International publication number: WO 2018/017802

(56) References cited:
- INTERDIGITAL COMMUNICATIONS: "Outer erasure code for efficient multiplexing", 3GPP DRAFT; R1-164667, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096360, Retrieved from the Internet: URL:http://www.3gpp.org/ftp/tsg_ran/WG1_RL 1/TSGR1_85/Docs/ [retrieved on 2016-05-14]
- QUALCOMM INCORPORATED: "Outer erasure code use cases and evaluation assumptions", 3GPP DRAFT; R1-164703-OUTER ERASURE CODE USE CASES AND EVALUATION ASSUMPTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Nanjing, China; 20160523 - 20160527 14 May 2016 (2016-05-14), XP051089932, Retrieved from the Internet: URL:http://www.3gpp.org/ftp/tsg_ran/WG1_RL 1/TSGR1_85/Docs/ [retrieved on 2016-05-14]
- SAMSUNG: "Multiple access for different vertical services in 5G new radio interface", 3GPP DRAFT; R1-162178, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 1 April 2016 (2016-04-01), XP051079511, Retrieved from the Internet: URL:http://www.3gpp.org/ftp/tsg_ran/WG1_RL 1/TSGR1_84b/Docs/ [retrieved on 2016-04-01]
- ZTE CORPORATION ET AL: "On forward compatibility for new radio interface", 3GPP DRAFT; R1-164292 ON FORWARD COMPATIBILITY FOR NEW RADIO INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Nanjing, China; 20160523 - 20160527 14 May 2016 (2016-05-14), XP051090009, Retrieved from the Internet: URL:http://www.3gpp.org/ftp/tsg_ran/WG1_RL 1/TSGR1_85/Docs/ [retrieved on 2016-05-14]

## Description

### RELATED APPLICATIONS

This application claims priority from U.S. Provisional Patent Application No. 62/365,187, entitled "USER EQUIPMENT AND BASE STATIONS THAT TRANSCEIVE ULTRA RELIABLE LOW LATENCY MESSAGES AMIDST DELAY TOLERANT TRANSCEPTIONS," filed on July 21, 2016.

### TECHNICAL FIELD

The present disclosure relates generally to communication systems. More specifically, the present disclosure relates to user equipment and base station that transceive ultra-reliable low latency communication (URLLC) messages amidst delay tolerant transceptions.

### BACKGROUND

Wireless communication devices have become smaller and more powerful in order to meet consumer needs and to improve portability and convenience. Consumers have become dependent upon wireless communication devices and have come to expect reliable service, expanded areas of coverage and increased functionality. A wireless communication system may provide communication for a number of wireless communication devices, each of which may be serviced by a base station. A base station may be a device that communicates with wireless communication devices.

As wireless communication devices have advanced, improvements in communication capacity, speed, flexibility and/or efficiency have been sought. However, improving communication capacity, speed, flexibility and/or efficiency may present certain problems.

For example, "Outer erasure code for efficient multiplexing" by InterDigital Communications (3GPP Draft; R1-164667, 20160514 3rd Generation Partnership Project (3GPP), Mobile Competence Centre ; 650, route des Lucioles ; F-06921 Sophia-Antipolis Cedex; France; Vol:RAN WG1, Nr:Nanjing, China; 20160523 - 20160527) discusses the benefits and trade-offs when using outer coding as a means for burst interference handling for channel coding schemes, in particular with respect to multiplexing of different traffic types on the same NR channel. Wireless communication devices may communicate with one or more devices using a communication structure. However, the communication structure used may only offer limited flexibility and/or efficiency. As illustrated by this discussion, systems and methods as defined in the independent claims improve communication flexibility and/or efficiency. The present invention is defined by the claims. According to the invention, a User Equipment is provided according to claim 1.

According to the invention, a method performed by a User Equipment is provided according to claim 2.

According to the invention, a Base Station is provided according to claim 3.

According to the invention, a method performed by a Base Station is provided according to claim 4. Embodiments not covered by the claims do not form part of the invention.

### BRIEF DESCRIPTION OF THE DRAWINGS

Figure 1 is a block diagram illustrating one implementation of one or more evolved NodeBs (eNBs) and one or more user equipments (UEs) in which systems and methods for transceiving ultra reliable low latency messages amidst delay tolerant transceptions may be implemented;
Figure 2 is a flow diagram illustrating a method by a UE, according to the claims;
Figure 3 is a flow diagram illustrating a method by an eNB, according to the claims;
Figure 4 is a flow diagram illustrating another method by a UE, according to the claims;
Figure 5 is a flow diagram illustrating another method by an eNB, according to the claims;
Figure 6 illustrates various components that may be utilized in a UE, according to the claims;
Figure 7 illustrates various components that may be utilized in an eNB, according to the claims;
Figure 8 is a block diagram illustrating one implementation of a UE in which systems and methods for transceiving ultra reliable low latency messages amidst delay tolerant transceptions may be implemented; and
Figure 9 is a block diagram illustrating one implementation of an eNB in which systems and methods for transceiving ultra reliable low latency messages amidst delay tolerant transceptions may be implemented.

### DETAILED DESCRIPTION

A user equipment (UE) is described. The UE includes a processor and memory in electronic communication with the processor. Instructions stored in the memory are executable to transmit or receive an ultra-reliable low latency communication (URLLC) transmission that overrides a downlink (DL) schedule or interferes on an uplink (UL) transmission with an enhanced mobile broadband (eMBB) transmission or a massive machine type communication (MMTC) transmission.

Configuration to transmit or receive URLLC services may be indicated in a configuration message where time, frequency and spatial resources are potentially used for URLLC transmission or reception. Prioritization of the URLLC transmission on the uplink may be based on power control effected via measurements from either one or more DL reference signals (RSs) or explicitly via one or more sounding reference signal (SRSs).

Configurable transport block (TB) interleaving may be used for eMBB services transmission and reception. A Downlink Control Information (DCI) format may indicate TB interleaving for eMBB services transmission and reception. A soft buffer size indication in a UE capability information transmission may be used to determine TB interleaving parameters.

Another UE is also described. The UE includes a processor and memory in electronic communication with the processor. Instructions stored in the memory are executable to transmit or receive an eMBB signal or a MMTC signal that may have its reception overridden by a URLLC transmission or have its reception at an eNB interfered with by an URLLC transmission.

According to a claimed embodiment, configuration to transmit or receive eMBB services is indicated in a configuration message where time, frequency and spatial resources are potentially used for URLLC transmission or reception.

An eNB is also described. The eNB includes a processor and memory in electronic communication with the processor. Instructions stored in the memory are executable to transmit or receive an URLLC transmission that overrides a DL schedule or interferes on a UL transmission with an eMBB transmission or a MMTC transmission.

Another eNB is also described. The eNB includes a processor and memory in electronic communication with the processor. Instructions stored in the memory are executable to transmit or receive an eMBB or MMTC signal that may have its reception overridden by an URLLC transmission or have its reception at the eNB interfered with by an URLLC transmission.

The 3rd Generation Partnership Project, also referred to as "3GPP," is a collaboration agreement that aims to define globally applicable technical specifications and technical reports for third and fourth generation wireless communication systems. The 3GPP may define specifications for next generation mobile networks, systems and devices.

3GPP Long Term Evolution (LTE) is the name given to a project to improve the Universal Mobile Telecommunications System (UMTS) mobile phone or device standard to cope with future requirements. In one aspect, UMTS has been modified to provide support and specification for the Evolved Universal Terrestrial Radio Access (E-UTRA) and Evolved Universal Terrestrial Radio Access Network (E-UTRAN).

At least some aspects of the systems and methods disclosed herein may be described in relation to the 3GPP LTE, LTE-Advanced (LTE-A) and other standards (e.g., 3GPP Releases 8, 9, 10, 11 and/or 12). However, the scope of the present disclosure should not be limited in this regard. At least some aspects of the systems and methods disclosed herein may be utilized in other types of wireless communication systems.

A wireless communication device may be an electronic device used to communicate voice and/or data to a base station, which in turn may communicate with a network of devices (e.g., public switched telephone network (PSTN), the Internet, etc.). In describing systems and methods herein, a wireless communication device may alternatively be referred to as a mobile station, a UE, an access terminal, a subscriber station, a mobile terminal, a remote station, a user terminal, a terminal, a subscriber unit, a mobile device, etc. Examples of wireless communication devices include cellular phones, smart phones, personal digital assistants (PDAs), laptop computers, netbooks, e-readers, wireless modems, etc. In 3GPP specifications, a wireless communication device is typically referred to as a UE. However, as the scope of the present disclosure should not be limited to the 3GPP standards, the terms "UE" and "wireless communication device" may be used interchangeably herein to mean the more general term "wireless communication device." A UE may also be more generally referred to as a terminal device.

In 3GPP specifications, a base station is typically referred to as a Node B, an evolved Node B (eNB), a home enhanced or evolved Node B (HeNB) or some other similar terminology. As the scope of the disclosure should not be limited to 3GPP standards, the terms "base station," "Node B," "eNB," and "HeNB" may be used interchangeably herein to mean the more general term "base station." Furthermore, the term "base station" may be used to denote an access point. An access point may be an electronic device that provides access to a network (e.g., Local Area Network (LAN), the Internet, etc.) for wireless communication devices. The term "communication device" may be used to denote both a wireless communication device and/or a base station. An eNB may also be more generally referred to as a base station device.

It should be noted that as used herein, a "cell" may be any communication channel that is specified by standardization or regulatory bodies to be used for International Mobile Telecommunications-Advanced (IMT-Advanced) and all of it or a subset of it may be adopted by 3GPP as licensed bands (e.g., frequency bands) to be used for communication between an eNB and a UE. It should also be noted that in E-UTRA and E-UTRAN overall description, as used herein, a "cell" may be defined as "combination of downlink and optionally uplink resources." The linking between the carrier frequency of the downlink resources and the carrier frequency of the uplink resources may be indicated in the system information transmitted on the downlink resources.

"Configured cells" are those cells of which the UE is aware and is allowed by an eNB to transmit or receive information. "Configured cell(s)" may be serving cell(s). The UE may receive system information and perform the required measurements on all configured cells. "Configured cell(s)" for a radio connection may consist of a primary cell and/or no, one, or more secondary cell(s). "Activated cells" are those configured cells on which the UE is transmitting and receiving. That is, activated cells are those cells for which the UE monitors the physical downlink control channel (PDCCH) and in the case of a downlink transmission, according to a claimed embodiment, those cells for which the UE decodes a physical downlink shared channel (PDSCH). "Deactivated cells" are those configured cells that the UE is not monitoring the transmission PDCCH. It should be noted that a "cell" may be described in terms of differing dimensions. For example, a "cell" may have temporal, spatial (e.g., geographical) and frequency characteristics.

It should be noted that the term "concurrent" and variations thereof as used herein may denote that two or more events may overlap each other in time and/or may occur near in time to each other, all within a given time interval. Additionally, "concurrent" and variations thereof may or may not mean that two or more events occur at precisely the same time.

Fifth generation cellular communications (also referred to as "New Radio" or "NR" by 3GPP) envisions the use of time/frequency/space resources to allow for enhanced mobile broadband (eMBB) communication and ultra-reliable low latency communication (URLLC) services, as well as massive machine type communication (MMTC) like services. In order for the services to use the time/frequency/space medium efficiently it would be useful to be able to flexibly schedule services on the medium so that the medium may be used as effectively as possible, given the conflicting needs of URLLC, eMBB, and MMTC.

Currently latency issues are addressed in LTE largely via scheduling and prioritization of transmissions. There are no real flexible uses of the medium outside of scheduling for MTC and delay tolerant services, although the Narrowband Internet of Things ("NBIoT") extensions to LTE employ a specific set of time/frequency resources. Moreover, there is little standardized information passed between different eNBs today that would enable such services to efficiently coexist. The systems and methods described herein teach various means for the eMBB, MMTC, and URLLC services to efficiently use the medium beyond what has been previously disclosed.

The described systems and methods teach various types of UEs employing algorithms and procedures to enable the flexible coexistence of URLLC, eMBB and/or MMTC communications for New Radio (NR). It should be understood that URLLC signals may puncture MMTC communications as well as eMBB, so what is described below in the context of eMBB may also apply to MMTC signals. In particular, an outer code, whether it is a Reed-Solomon code or a Fountain code may also be employed for MMTC signals.

If an outer code may be employed for a given service (e.g., URLLC, eMBB or MMTC), configuration of the service to a UE (transmit or receive) may also indicate the use of service-specific Adaptive Modulation and Coding Tables, which may enable the UE to properly interpret which coding rate and/or modulation scheme that was used for specific transmissions and/or receptions for that service.

Regarding the downlink (DL), in one approach, an eMBB transmission may be punctured with a signal with a flag indicating a URLLC signal. Alternatively a URLLC signal may be indicated by specific reference signals. The eMBB signal may or may not be outer coded.

Priority reservation resources may be provided for URLLC signals that may be shared with eMBB signals. URLLC signals may be identified by a unique preamble, midamble or postamble if not reference signals (RSs).

The target UE for URLLC (which may or may not be the same UE involved in eMBB) may monitor time/frequency/space resources for the URLLC signal. Upon identifying the URLLC signal via the flag (e.g., the target UE receives the signal and decodes the URLLC message), the target UE may attempt descrambling with a UE specific ID. This UE specific ID may be a Cell Radio Network Temporary Identifier (C-RNTI) or some new RNTI.

When puncturing is detected, the UE receiving eMBB may attempt to verify that a rate matched signal is present. In some circumstances, part of the codeblock may be erased. For example, the eNB may not be able to revise or delay the order of the transmission stream if REs are punctured with URLLC signals. On detection of at least part of codeblock erasure, the eMBB-receiving UE may discard this code block or the bits in the codeblock if the outer code (e.g., Fountain Code) is used. The benefit of this approach is that likelihood-ratio (LR)/belief propagation, or other decoding metrics are not corrupted by the puncturing, which can be a problem for Fountain Codes. Conversely, the eMBB-receiving UE may try to decode the code block despite the codeblock erasure.

Also regarding the downlink, in another approach, an eMBB transmission may be punctured without a flag indicating the presence of a URLLC signal. In this approach, resources for potential URLLC transmissions are known to the eMBB UE, but not necessarily whether a URLLC transmission has occurred. The eMBB UE receiving the eMBB transmission may attempt decoding without using URLLC prioritized resources. The eMBB usage of resources may have additional parity bits if not used for URLLC.

In this approach, the eMBB-receiving UE would first attempt to decode assuming URLLC is present in prioritized time/frequency resources. If the decode is successful, the UE may send the transport block to higher layers, otherwise the UE may attempt to decode assuming URLLC bits are eMBB bits. If this decode is successful, the UE may send the transport block to higher layers, otherwise the UE may indicate negative acknowledgment (NACK) to the eNB.

Regarding the downlink and the uplink (UL), specific areas of time/frequency resources for URLLC traffic may be reserved as well as the possibility of resources devoted to mixed uses. According to a claimed embodiment, signalling of where these resources are located is performed via configuration of the UE for URLLC or configuration of eMBB.

Regarding the uplink, in an approach, URLLC signals on the uplink may be transmitted via a grantless access, in prioritized time/frequency/spatial resources. Power control for URLLC signals may be realized by implied measurements of the DL power (which can reduce latency resulting from measurements) or an eNB-explicit grant.

The eNB does not know that a UE's transmission of URLLC signaling might have punctured in space/time an eMBB signal transmitted by another UE. In one approach to this case, the UE may preemptively not transmit in URLLC prioritized resources (via configuration of the eNB based on eMBB prioritization of transmissions). In another approach to this case, the UE may transmit on time frequency resources eMBB signals agnostic to whether or not there is an URLLC transmission transpiring. Because the co-scheduling of eMBB/URLLC signals may happen infrequently enough that from the point of the eMBB-transmitting UE, the UE may not lose a significant amount of TBs.

In another approach, the URLLC signal may be transmitted as soon as possible via Listen Before Talk (LBT).

Regarding both the downlink and the uplink, TB-level interleaving (also referred to as "interleaving across code blocks") may be applied so as to avoid eMBB performance degradation due to overriding by URLLC signaling. There may be several implementations, as follows. In a first implementation, a UE can be configured with TB-level interleaving through dedicated Radio Resource Control (RRC) signaling. Once the UE is configured with TB-level interleaving, the UE and the eNB assume that the TB-level interleaving is applied. Otherwise, the UE and the eNB do not assume the TB-level interleaving.

In a second implementation, if a certain transmission mode is used for data transmission (e.g. eMBB data), the TB-level interleaving applies to the data. Otherwise, the UE and the eNB do not assume the TB-level interleaving.

In a third implementation, if a certain DCI format is used to schedule data transmission (e.g. eMBB data), the TB-level interleaving applies to the data. Otherwise, the UE and the eNB do not assume the TB-level interleaving.

In a fourth implementation, the DCI format may have a field for indicating the TB-level interleaving. If the field value is set to "1", the TB-level interleaving applies to the corresponding data. Otherwise, the UE and the eNB do not assume the TB-level interleaving.

In a fifth implementation, UE capability of TB-level interleaving may be tied to the UE category that specifies the UE's soft buffer size. TB-interleaving may be available by the UE that supports a relatively large soft buffer size.

Various examples of the systems and methods disclosed herein are now described with reference to the Figures, where like reference numbers may indicate functionally similar elements. The systems and methods as generally described and illustrated in the Figures herein could be arranged and designed in a wide variety of different implementations. Thus, the following more detailed description of several implementations, as represented in the Figures, is not intended to limit scope, as claimed, but is merely representative of the systems and methods.

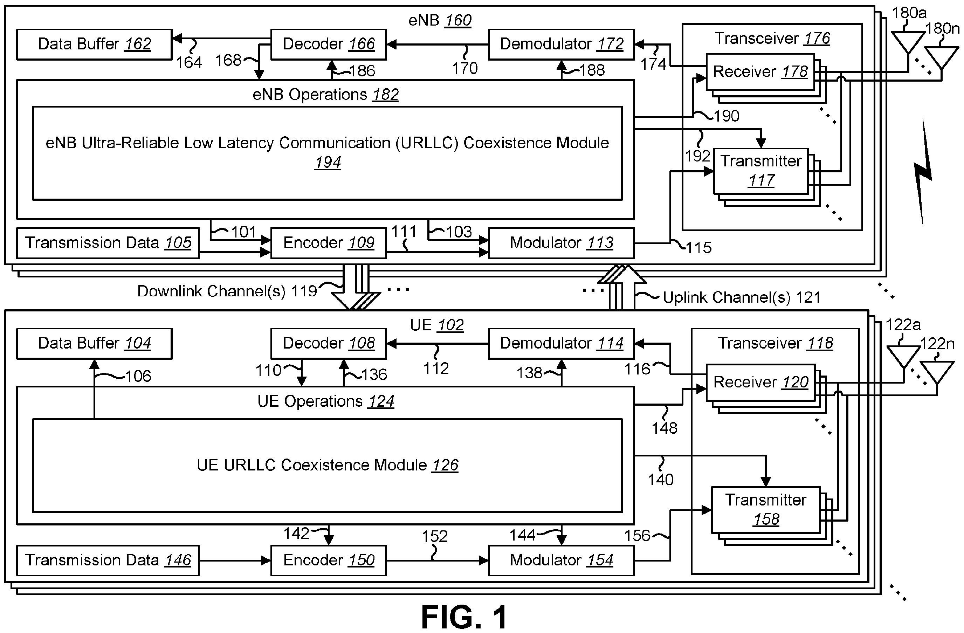

Figure 1 is a block diagram illustrating one implementation of one or more eNBs 160 and one or more UEs 102 in which systems and methods for transceiving ultra reliable low latency messages amidst delay tolerant transceptions may be implemented. The one or more UEs 102 communicate with one or more eNBs 160 using one or more antennas 122a-n. For example, a UE 102 transmits electromagnetic signals to the eNB 160 and receives electromagnetic signals from the eNB 160 using the one or more antennas 122a-n. The eNB 160 communicates with the UE 102 using one or more antennas 180a-n.

The UE 102 and the eNB 160 may use one or more channels 119, 121 to communicate with each other. For example, a UE 102 may transmit information or data to the eNB 160 using one or more uplink channels 121. Examples of uplink channels 121 include a physical uplink control channel (PUCCH) and a physical uplink shared channel (PUSCH), etc. The one or more eNBs 160 may also transmit information or data to the one or more UEs 102 using one or more downlink channels 119, for instance. Examples of downlink channels 119 include a PDCCH, a PDSCH, etc. Other kinds of channels may be used.

Each of the one or more UEs 102 may include one or more transceivers 118, one or more demodulators 114, one or more decoders 108, one or more encoders 150, one or more modulators 154, a data buffer 104 and a UE operations module 124. For example, one or more reception and/or transmission paths may be implemented in the UE 102. For convenience, only a single transceiver 118, decoder 108, demodulator 114, encoder 150 and modulator 154 are illustrated in the UE 102, though multiple parallel elements (e.g., transceivers 118, decoders 108, demodulators 114, encoders 150 and modulators 154) may be implemented.

The transceiver 118 may include one or more receivers 120 and one or more transmitters 158. The one or more receivers 120 may receive signals from the eNB 160 using one or more antennas 122a-n. For example, the receiver 120 may receive and downconvert signals to produce one or more received signals 116. The one or more received signals 116 may be provided to a demodulator 114. The one or more transmitters 158 may transmit signals to the eNB 160 using one or more antennas 122a-n. For example, the one or more transmitters 158 may upconvert and transmit one or more modulated signals 156.

The demodulator 114 may demodulate the one or more received signals 116 to produce one or more demodulated signals 112. The one or more demodulated signals 112 may be provided to the decoder 108. The UE 102 may use the decoder 108 to decode signals. The decoder 108 may produce decoded signals 110, which may include a UE-decoded signal 106 (also referred to as a first UE-decoded signal 106). For example, the first UE-decoded signal 106 may comprise received payload data, which may be stored in a data buffer 104. Another signal included in the decoded signals 110 (also referred to as a second UE-decoded signal 110) may comprise overhead data and/or control data. For example, the second UE-decoded signal 110 may provide data that may be used by the UE operations module 124 to perform one or more operations.

In general, the UE operations module 124 may enable the UE 102 to communicate with the one or more eNBs 160. The UE operations module 124 may include one or more of a UE ultra-reliable low latency communication (URLLC) coexistence module 126.

The described systems and methods teach various types of UEs 102 employing algorithms and procedures to enable the flexible coexistence of ultra-reliable low latency communication (URLLC), enhanced mobile broadband (eMBB), and massive machine type communication (MMTC) for New Radio (NR). Although most of the description below deals with URLLC coexisting with eMBB transmissions, there is also the case where URLLC might coexist with MMTC.

It should be noted that MMTC services may have regions that are reserved for them because they may have narrower bandwidth overall, and the traffic is more predictable with MMTC devices. Thus, it may be unlikely that MMTC services will need special mechanisms to coexist with eMBB traffic. However, there may be a need to schedule URLLC traffic contemporaneously with MMTC traffic. In the following discussion, therefore, unless otherwise specified, what applies for eMBB traffic will also be considered to apply to MMTC traffic.

NR may have the following properties. Autonomous/grant-free/contention based UL non-orthogonal multiple access may have the following characteristics: a transmission from a UE 102 does not need the dynamic and explicit scheduling grant from an eNB 160; and multiple UEs 102 can share the same time and frequency resources.

For autonomous/grant-free/contention based UL non-orthogonal multiple access, the following properties may be further defined. Collision of time/frequency resources from different UEs 102 may have solutions that potentially include code, sequence, or interleaver pattern. For UL synchronization (DL synchronization is assumed), in a first case, the timing offsets between UEs 102 may be within a cyclic prefix. In a second case, the timing offsets between UEs 102 can be greater than a cyclic prefix.

For autonomous/grant-free/contention based UL non-orthogonal multiple access, there is a requirement for power control. In a first case, there may be a perfect open-loop power control (i.e., equal average signal-to-noise ratio (SNR) between UEs 102 for potentially link level calibration). In a second case, there may be realistic open-loop power control with certain alpha and P0 values. In a third case, there may be close-loop power control.

NR also supports at least synchronous/scheduling-based orthogonal multiple access for downlink and/or uplink (DL/UL) transmission schemes, at least targeting for eMBB. It should be noted that as used herein "synchronous" means that timing offset between UEs 102 is within the cyclic prefix by, for example, timing alignment.

In addition, the key performance indicator (KPI) for reliability of URLLC may be set to 1-10⁻⁵ (i.e., 99.999%). At least for some forms of transmission, URLLC will typically result in short bursts of data transmission in L1 (approximately 0.1 ms, for example).

URLLC operation may require very low user plane latency (<0.5 ms) and 10⁻⁵ block error rate (BLER). For eMBB, the target for user plane latency should be 4ms for UL, and 4ms for DL.

There may be a mix of contention based access and scheduled access for NR to accommodate different services. Because spectrum is very costly, and a goal of NR design is to use spectrum more efficiently than LTE-Advanced, it is important to have means where the services for NR coexist.

To contextualize how to explain such coexistence mechanisms, the discussion herein will mostly focus on the scenario of URLLC sharing the medium with eMBB. However, as stated above, this does not rule out URLLC sharing the medium with MMTC. According to a claimed embodiment, the URLLC and eMBB medium sharing described herein also applies to MMTC and URLLC medium sharing scenarios.

Several approaches for medium sharing as well as the behavior of a UE 102 and eNB 160 are described herein. It may be assumed unless stated otherwise that there exists, for a given cell configuration, a region of time/frequency resources which are at least partly shared by URLLC and eMBB services.

According to a claimed embodiment, a first approach to medium sharing occurs on the downlink. In this approach an eMBB transmission is punctured by a signal with a flag indicating a URLLC signal. It is assumed that a UE 102 may be configured to transceive (i.e., transmit and/or receive) URLLC services and may be configured to transceive eMBB services.

According to a claimed embodiment, the case of an eMBB transmission that is on the downlink (i.e., from eNB 160 to UE 102) is considered. An eMBB transmission of this sort may be semi-persistently scheduled. In every slot or every two or more slots, the UE 102 may monitor the PDCCH which schedules PDSCH for eMBB traffic. It is assumed that the eMBB traffic is delay tolerant. If a URLLC transmission (e.g., data transmission with a shorter time duration and/or with shorter time granularities, for example one or a few symbols) is required for the downlink, and other resources are not available, an eNB scheduler pre-empts or punctures transmission of one or more subframes, slots or symbols of the eMBB transmission (e.g. data transmission with slot or subframe basis, for example data transmission with a duration of one or a few slots) with an URLLC transmission that may or may not be targeted to the same UE 102 receiving the eMBB transmission.

In this case (i.e., the URLLC transmission puncturing the eMBB transmission), it would be beneficial if the eMBB-receiving UE 102 could determine which subframes, slots or symbols were pre-empted or punctured by the URLLC signal. For example, if the eMBB-receiving UE 102 had that knowledge, then the eMBB-receiving UE 102 would know not to use the URLLC transmission for decoding eMBB messages. In this case, the URLLC transmission would not only be useless to the eMBB-receiving UE 102, but would significantly degrade the performance of the decoding process, especially if an outer-code (e.g., Fountain Code or Raptor Code) were used.

There are two implementations for indicating the presence of an URLLC signal described herein. In a first implementation, the pre-empting URLLC signal and/or the pre-empted eMBB resources may be indicated via a specific sequence of bits. This would require that the downlink signal, which may be an Orthogonal Frequency Division Multiplexing (OFDM) signal, be demodulated at least to the data constellation level. This sequence of bits may occur in a specific field at the beginning (e.g., pre-amble) or elsewhere in the URLLC transmission (e.g., midamble or postamble), which may be a different timing from (e.g., after) the PDCCH reception for the pre-empted eMBB transmission or even after pre-empted eMBB transmission.

In a second implementation, the pre-empting URLLC signal and/or the pre-empted eMBB resources may be indicated via URLLC-specific reference signals (RSs). This implementation would mean that the UE 102 need only detect specific reference signals, and would not have to bother with the information in the transmission itself. For example, the URLLC-specific RSs may contain one or more specific roots sequence of a Zadoff Chu Sequence and its cyclic shifts.

In either implementation, the UE 102 may monitor the pre-emption indication (e.g., the specific bit sequence or specific RSs) with an interval of a slot or shorter. In either implementation, the specific bit sequence or specific RSs would constitute a flag to indicate to the eMBB-receiving UE 102 that it can ignore the URLLC transmission if the UE 102 is not configured to receive the URLLC transmission (or conversely that the eMBB-receiving UE 102 should attempt to demodulate and decode the URLLC transmission if the UE 102 is configured to receive URLLC services.) In either case, however, the UE 102, upon detection of this flag, would not use the URLLC message for eMBB message decoding.

Alternatively, the eMBB-receiving UE 102 may, to trade off hardware complexity for performance, attempt demodulation of the received signal even though the flag is present. However, this option is not preferable to the eMBB-receiving UE 102 identifying the URLLC signal.

According to a claimed embodiment, whichever UE 102 is the target UE 102 for URLLC (i.e., the UE 102 for which the pre-empted or punctured signal is the target recipient, which may or may not be same UE 102 involved in eMBB), the target UE 102 monitors time/frequency/space resources for the pre-empting URLLC signal and/or the pre-empted eMBB resources. On identifying the URLLC signal via the flag (e.g., the UE 102 receives the flag signal and decodes the URLLC message), the target UE 102 attempts unscrambling with a UE-specific ID. The UE-specific ID may be a C-RNTI or, according to a claimed embodiment, is some new RNTI, which is denoted as URLLC-RNTI.

A second approach to medium sharing also occurs on the downlink. In this approach, an eMBB transmission is pre-empted or punctured by a signal without a flag indicating the presence URLLC signal. As in the previous approach, an eNB 160 configuration may enable the transception of URLLC signals and eMBB transceptions. Therefore, a UE 102 may be configured to transceive (i.e., transmit and/or receive) URLLC services and may be configured to transceive eMBB services.

An eMBB-receiving UE 102 may be made aware of URLLC transmissions via configuration for eMBB if the eMBB-receiving UE 102 is not configured to transmit and/or receive URLLC messages. If it is so configured, an eMBB-receiving UE 102 may attempt to decode the received signal in its resources without explicitly identifying the URLLC signal. This may be possible if the resources used for URLLC transmission are implicitly also used for forward error correction bits that are otherwise redundantly coded. That is, time/frequency/space resources for shared by eMBB and URLLC may, when used by eMBB, always be used by eMBB to transmit parity check information that is not strictly needed for decoding if the channel provides sufficiently high SNR.

The eMBB-receiving UE 102 may try decoding the eMBB signal with and without the URLLC-shared resources. If the post-decoding parity check of either the eMBB signal without URLLC-shared resources or with shared URLLC resources indicates successful decoding, the eMBB signal is deemed successfully received by the UE 102. The eMBB decoded message may be forwarded to higher layers in the UE's 102 protocol stack. If both parity checks fail, the UE 102 may indicate a negative acknowledgement to the eNB 160.

A third approach to medium sharing occurs on the downlink and uplink. This approach includes reservation of specific areas of time/frequency resources for URLLC traffic as well as the possibility of resources devoted to mixed uses. Signaling of where resources for URLLC and eMBB are located may be via configuration of the UE 102 for URLLC or configuration of eMBB. The eMBB-configured UE 102 may be aware that certain resources assigned to it for an eMBB transmission may be pre-empted or punctured by URLLC traffic, but may not always have such pre-emption or puncturing done.

In addition, URLLC and eMBB traffic may only partially overlap, based on how the cell is configured. This approach provides benefits in that the degree of puncturing to eMBB may be scaled according to a desired quality of service or block error rate induced by URLLC puncturing of eMBB resources. In effect, the use of shared resources between eMBB and URLLC provides prioritized access to both eMBB and URLLC services.

This approach is also particularly attractive for MMTC time/frequency/space resources coexisting with URLLC resources as the demand for time frequency resources on both the uplink and downlink for MMTC traffic can be very well known because of the regularity of demands by MMTC UEs 102 for the channel in which to transmit messages corresponding to MMTC services.

A fourth approach to medium sharing occurs on the uplink. In this approach, URLLC signals on the uplink may be transmitted via grantless access, in prioritized time/frequency/spatial resources.

Grantless access on the uplink has been considered to enable URLLC traffic. However, with a grantless access on the uplink, a URLLC signal may interfere with the eMBB transmission. Without further means, there may be no way to decode both the URLLC signal and the eMBB signal at the eNB 160. Furthermore, the eNB 160 may not be aware of a grantless access transmission.

To remedy this behavior, URLLC signals may be prioritized by transmitted power. This can be achieved through either power control for URLLC signals made implicitly by measurements of downlink power or by explicit power control based on the eNB 160 scheduling sounding reference signal transmission periodically to URLLC-configured UEs 102.

Another remedy for this problem would be to prioritize URLLC transmissions based on configuration from the eNB 160. Therefore, "very high priority" URLLC signals might use time/frequency/spatial resources that are orthogonal to eMBB signals and "not so very high priority" URLLC signals might use both shared and exclusive URLLC resources that are chosen pseudo-randomly at the time for transmission.

Still another remedy for this problem is for the URLLC-configured UE 102 to use a Listen Before Talk (LBT) protocol to share the medium with eMBB.

Combinations of the above remedies may be applied. On the other hand, because the co-scheduling of eMBB/URLLC signals may happen infrequently enough that from the point of the eMBB-transmitting UE 102, it may not lose a significant amount of transport blocks. Based on demand for URLLC traffic or eMBB traffic, it may be acceptable to let the two uplink transmissions collide. In other words, both transmissions may be made and the cell may be configured based on traffic and offered load to accept this level of loss.

A fifth approach to medium sharing occurs on both the downlink and the uplink. In this approach, transport block level (TB-level) interleaving (also referred to as "interleaving across code blocks") may be applied so as to avoid eMBB performance degradation due to overriding by URLLC signaling.

There are several aspects of this approach, as follows. A UE 102 may be configured with TB-level interleaving through dedicated RRC signaling. Once the UE 102 is configured with TB-level interleaving, the eMBB-capable UE 102 and the eNB 160 may assume that the TB-level interleaving is applied. Otherwise, the eMBB-capable UE 102 and the eNB 160 do not assume the TB-level interleaving.

If a certain transmission mode is used for data transmission (e.g., eMBB data), the TB-level interleaving may apply to the data. Otherwise, the UE 102 and the eNB 160 do not assume the TB-level interleaving. Thus, for URLLC transmissions that puncture an eMBB transmission, the eMBB transmission will have burst interference.

If a certain DCI format is used to schedule data transmission (e.g., eMBB data), the TB-level interleaving may apply to the data. Otherwise, the UE 102 and the eNB 160 do not assume the TB-level interleaving.

The DCI format may have a field for indicating the TB-level interleaving. If the field value is set to "1", the TB-level interleaving may apply to the corresponding data. Otherwise, the UE 102 and the eNB 160 do not assume the TB-level interleaving. Alternatively, TB-level interleaving may be set via an information element upon configuration of a UE 102 to receive eMBB or other services.

UE 102 capability of TB-level interleaving may be tied to the UE 102 category that specifies the UE's 102 soft buffer size. For example, TB-interleaving may be available by the UE 102 that supports a relatively large soft buffer size.

URLLC transmissions may not be TB-interleaved when they puncture TB-interleaved eMBB transmissions.

The UE operations module 124 may provide information 148 to the one or more receivers 120. For example, the UE operations module 124 may inform the receiver(s) 120 when to receive retransmissions.

The UE operations module 124 may provide information 138 to the demodulator 114. For example, the UE operations module 124 may inform the demodulator 114 of a modulation pattern anticipated for transmissions from the eNB 160.

The UE operations module 124 may provide information 136 to the decoder 108. For example, the UE operations module 124 may inform the decoder 108 of an anticipated encoding for transmissions from the eNB 160.

The UE operations module 124 may provide information 142 to the encoder 150. The information 142 may include data to be encoded and/or instructions for encoding. For example, the UE operations module 124 may instruct the encoder 150 to encode transmission data 146 and/or other information 142. The other information 142 may include PDSCH Hybrid Automatic Repeat Request Acknowledgment (HARQ-ACK) information.

The encoder 150 may encode transmission data 146 and/or other information 142 provided by the UE operations module 124. For example, encoding the data 146 and/or other information 142 may involve error detection and/or correction coding, mapping data to space, time and/or frequency resources for transmission, multiplexing, etc. The encoder 150 may provide encoded data 152 to the modulator 154.

The UE operations module 124 may provide information 144 to the modulator 154. For example, the UE operations module 124 may inform the modulator 154 of a modulation type (e.g., constellation mapping) to be used for transmissions to the eNB 160. The modulator 154 may modulate the encoded data 152 to provide one or more modulated signals 156 to the one or more transmitters 158.

The UE operations module 124 may provide information 140 to the one or more transmitters 158. This information 140 may include instructions for the one or more transmitters 158. For example, the UE operations module 124 may instruct the one or more transmitters 158 when to transmit a signal to the eNB 160. For instance, the one or more transmitters 158 may transmit during a UL subframe. The one or more transmitters 158 may upconvert and transmit the modulated signal(s) 156 to one or more eNBs 160.

The eNB 160 may include one or more transceivers 176, one or more demodulators 172, one or more decoders 166, one or more encoders 109, one or more modulators 113, a data buffer 162 and an eNB operations module 182. For example, one or more reception and/or transmission paths may be implemented in an eNB 160. For convenience, only a single transceiver 176, decoder 166, demodulator 172, encoder 109 and modulator 113 are illustrated in the eNB 160, though multiple parallel elements (e.g., transceivers 176, decoders 166, demodulators 172, encoders 109 and modulators 113) may be implemented.

The transceiver 176 may include one or more receivers 178 and one or more transmitters 117. The one or more receivers 178 may receive signals from the UE 102 using one or more antennas 180a-n. For example, the receiver 178 may receive and downconvert signals to produce one or more received signals 174. The one or more received signals 174 may be provided to a demodulator 172. The one or more transmitters 117 may transmit signals to the UE 102 using one or more antennas 180a-n. For example, the one or more transmitters 117 may upconvert and transmit one or more modulated signals 115.

The demodulator 172 may demodulate the one or more received signals 174 to produce one or more demodulated signals 170. The one or more demodulated signals 170 may be provided to the decoder 166. The eNB 160 may use the decoder 166 to decode signals. The decoder 166 may produce one or more decoded signals 164, 168. For example, a first eNB-decoded signal 164 may comprise received payload data, which may be stored in a data buffer 162. A second eNB-decoded signal 168 may comprise overhead data and/or control data. For example, the second eNB-decoded signal 168 may provide data (e.g., PDSCH HARQ-ACK information) that may be used by the eNB operations module 182 to perform one or more operations.

In general, the eNB operations module 182 may enable the eNB 160 to communicate with the one or more UEs 102. The eNB operations module 182 may include one or more of an eNB URLLC coexistence module 194.

The eNB URLLC coexistence module 194 may transceive URLLC messages amidst delay tolerant transceptions as described above. In an implementation, the eNB URLLC coexistence module 194 may configure a UE 102 to transceive URLLC services. For example, the eNB URLLC coexistence module 194 may send a configuration message to the UE 102 that configures URLLC services in the UE 102.

The eNB URLLC coexistence module 194 may configure the UE 102 to transceive eMBB services or MMTC services. For example, the eNB URLLC coexistence module 194 may send a configuration message to the UE 102 that configures eMBB or MMTC services in the UE 102. This configuration message may be the same as or different than the configuration message for URLLC services.

The eNB URLLC coexistence module 194 may transmit or receive a URLLC transmission that overrides a downlink (DL) schedule or interferes on an uplink (UL) transmission with eMBB transmission or a MMTC transmission. Additionally, the eNB URLLC coexistence module 194 may transmit or receive an eMBB signal or MMTC signal that may have its reception overridden by a URLLC transmission or have its reception at the eNB 160 interfered with by an URLLC transmission.

The eNB operations module 182 may provide information 188 to the demodulator 172. For example, the eNB operations module 182 may inform the demodulator 172 of a modulation pattern anticipated for transmissions from the UE(s) 102.

The eNB operations module 182 may provide information 186 to the decoder 166. For example, the eNB operations module 182 may inform the decoder 166 of an anticipated encoding for transmissions from the UE(s) 102.

The eNB operations module 182 may provide information 101 to the encoder 109. The information 101 may include data to be encoded and/or instructions for encoding. For example, the eNB operations module 182 may instruct the encoder 109 to encode information 101, including transmission data 105.

The encoder 109 may encode transmission data 105 and/or other information included in the information 101 provided by the eNB operations module 182. For example, encoding the data 105 and/or other information included in the information 101 may involve error detection and/or correction coding, mapping data to space, time and/or frequency resources for transmission, multiplexing, etc. The encoder 109 may provide encoded data 111 to the modulator 113. The transmission data 105 may include network data to be relayed to the UE 102.

The eNB operations module 182 may provide information 103 to the modulator 113. This information 103 may include instructions for the modulator 113. For example, the eNB operations module 182 may inform the modulator 113 of a modulation type (e.g., constellation mapping) to be used for transmissions to the UE(s) 102. The modulator 113 may modulate the encoded data 111 to provide one or more modulated signals 115 to the one or more transmitters 117.

The eNB operations module 182 may provide information 192 to the one or more transmitters 117. This information 192 may include instructions for the one or more transmitters 117. For example, the eNB operations module 182 may instruct the one or more transmitters 117 when to (or when not to) transmit a signal to the UE(s) 102. The one or more transmitters 117 may upconvert and transmit the modulated signal(s) 115 to one or more UEs 102.

It should be noted that a DL subframe may be transmitted from the eNB 160 to one or more UEs 102 and that a UL subframe may be transmitted from one or more UEs 102 to the eNB 160. Furthermore, both the eNB 160 and the one or more UEs 102 may transmit data in a standard special subframe.

It should also be noted that one or more of the elements or parts thereof included in the eNB(s) 160 and UE(s) 102 may be implemented in hardware. For example, one or more of these elements or parts thereof may be implemented as a chip, circuitry or hardware components, etc. It should also be noted that one or more of the functions or methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

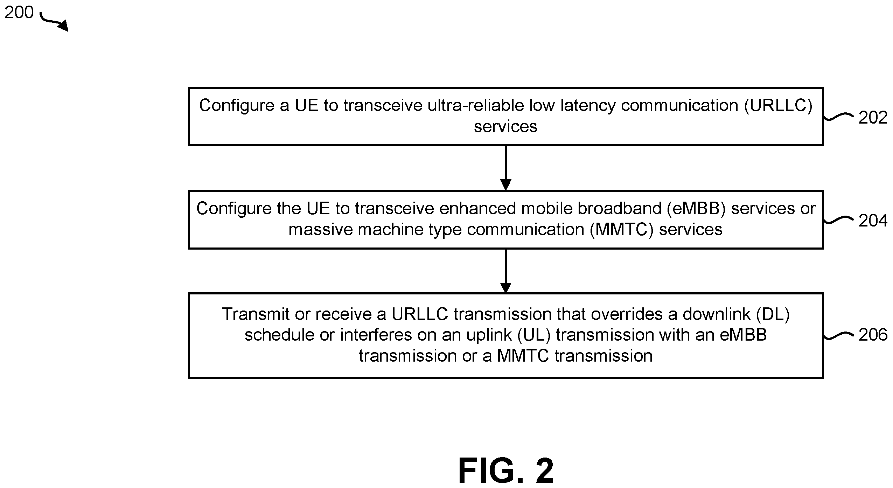

Figure 2 is a flow diagram illustrating a method 200 by a UE 102. The UE 102 may communicate with one or more eNBs 160 in a wireless communication network. In one implementation, the wireless communication network may include an NR network.

The UE 102 may be configured 202 to transceive (i.e., transmit and/or receive) ultra-reliable low latency communication (URLLC) services. For example, the UE 102 may receive a configuration message from an eNB 160 that configures URLLC services in the UE 102.

The UE 102 may be configured 204 to transceive enhanced mobile broadband (eMBB) services or massive machine type communication (MMTC) services. For example, the UE 102 may receive a configuration message from an eNB 160 that configures eMBB or MMTC services in the UE 102. This configuration message may be the same as or different than the configuration message for URLLC services.

The UE 102 may transmit or receive 206 a URLLC transmission that overrides a downlink (DL) schedule or interferes on an uplink (UL) transmission with an eMBB transmission or a MMTC transmission. According to a claimed embodiment, configuration to transmit or receive URLLC services is indicated in a configuration message where time, frequency and spatial resources are potentially used for URLLC transmission or reception. Signaling of where resources for URLLC and eMBB are located is performed via configuration of the UE 102 for URLLC or configuration of eMBB. Thus an eMBB-configured UE 102 is aware that certain resources assigned to it for eMBB transmission is punctured by URLLC traffic, but may not always have such puncturing done.

In another approach, prioritization of the URLLC transmission on the uplink may be based on power control effected via measurements from either one or more DL reference signals (RSs) or explicitly via one or more sounding reference signal (SRSs). URLLC signals on the uplink may be transmitted via grantless access, in prioritized time/frequency/spatial resources. URLLC signals may be prioritized by transmitted power, which can be achieved through either power control for URLLC signals made implicitly by measurements of downlink power (e.g., downlink reference signals (DL-RSs)) or by explicit power control based on the eNB 160 scheduling sounding reference signal (SRS) transmission periodically to URLLC-configured UEs 102.

In yet another approach, TB-level interleaving may be applied so as to avoid eMBB performance degradation due to overriding by URLLC signaling. In an implementation, configurable TB interleaving may be used for eMBB services transmission and reception. The UE 102 may be configured with TB-level interleaving through dedicated RRC signaling. Once the UE 102 is configured with it, the eMBB-capable UE 102 and the eNB 160 may assume that the TB-level interleaving is applied. Otherwise, the eMBB-capable UE 102 and the eNB 160 do not assume the TB-level interleaving.

In another implementation, a DCI format may indicate TB interleaving for eMBB services transmission and reception. If a certain DCI format is used to schedule data transmission (e.g., eMBB data), the TB-level interleaving may apply to the data. Otherwise, the UE 102 and the eNB 160 do not assume the TB-level interleaving.

In yet another implementation, a soft buffer size indication in a UE capability information transmission may be used to determine TB interleaving parameters. UE 102 capability of TB-level interleaving may be tied to the UE 102 category that specifies the UE's soft buffer size. TB-interleaving may be available by the UE 102 that supports a relatively large soft buffer size.

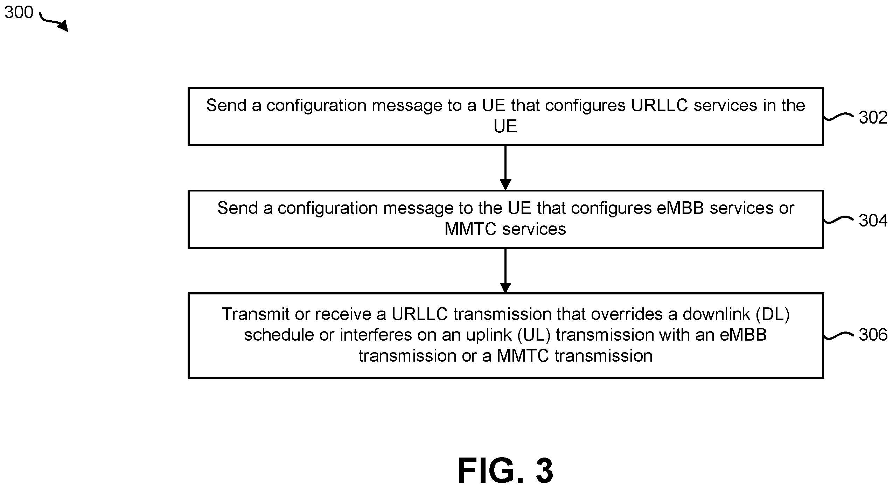

Figure 3 is a flow diagram illustrating a method 300 by an eNB 160. The eNB 160 may communicate with one or more UEs 102 in a wireless communication network. In one implementation, the wireless communication network may include an NR network.

The eNB 160 may send 302 a configuration message to the UE 102 that configures URLLC services in the UE 102. The configuration message may configure the UE 102 to transceive URLLC services.

The eNB 160 may send 304 a configuration message to the UE 102 that configures eMBB services or MMTC services. The configuration message may configure the UE 102 to transceive eMBB services or MMTC services. This configuration message may be the same as or different than the configuration message for URLLC services.

The eNB 160 may transmit or receive 306 a URLLC transmission that overrides a downlink (DL) schedule or interferes on an uplink (UL) transmission with eMBB transmission or a MMTC transmission. This may be accomplished as described in connection with Figure 2.

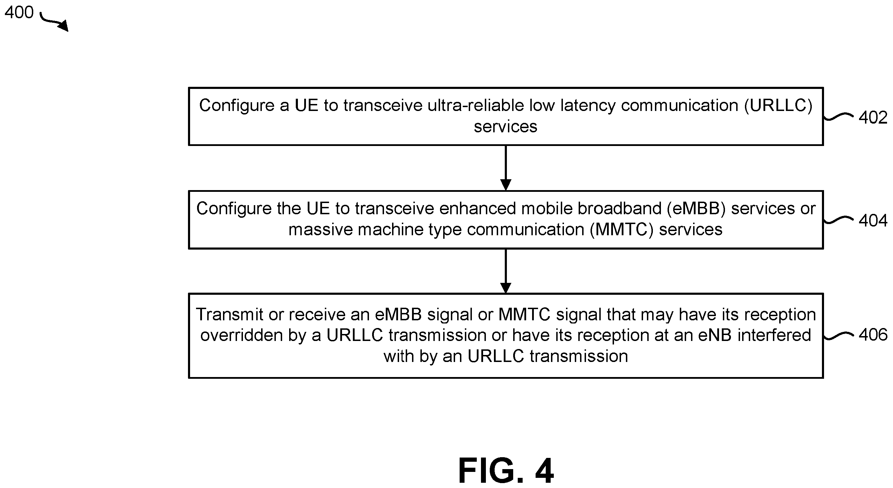

Figure 4 is a flow diagram illustrating another method 400 by a UE 102. The UE 102 may communicate with one or more eNBs 160 in a wireless communication network. In one implementation, the wireless communication network may include an NR network.

The UE 102 may be configured 402 to transceive (i.e., transmit and/or receive) ultra-reliable low latency communication (URLLC) services. For example, the UE 102 may receive a configuration message from an eNB 160 that configures URLLC services in the UE 102.

The UE 102 may be configured 404 to transceive enhanced mobile broadband (eMBB) services or massive machine type communication (MMTC) services. For example, the UE 102 may receive a configuration message from an eNB 160 that configures eMBB or MMTC services in the UE 102. This configuration message may be the same as or different than the configuration message for URLLC services.

The UE 102 may transmit or receive 406 an eMBB signal or MMTC signal that may have its reception overridden by a URLLC transmission or have its reception at an eNB 160 interfered with by an URLLC transmission. This may be accomplished as described in connection with Figure 2.

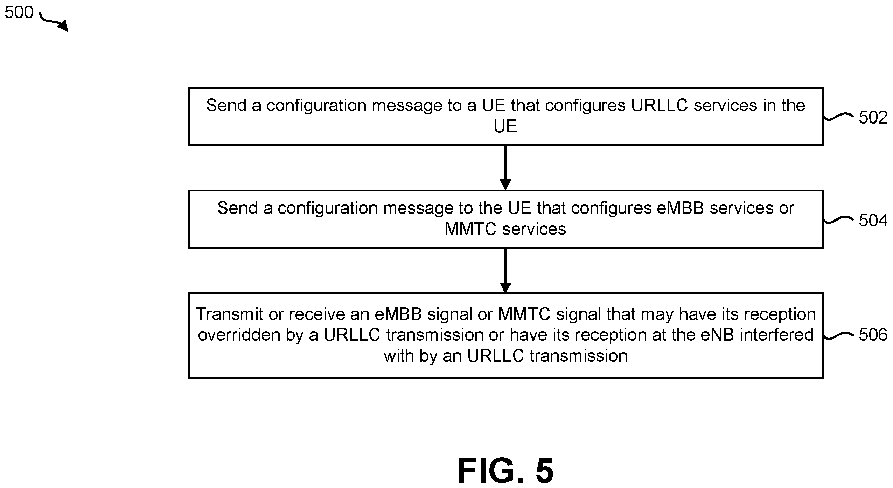

Figure 5 is a flow diagram illustrating another method 500 by an eNB 160. The eNB 160 may communicate with one or more UEs 102 in a wireless communication network. In one implementation, the wireless communication network may include an NR network.

The eNB 160 may send 502 a configuration message to the UE 102 that configures URLLC services in the UE 102. The configuration message may configure the UE 102 to transceive URLLC services.

The eNB 160 may send 504 a configuration message to the UE 102 that configures eMBB services or MMTC services. The configuration message may configure the UE 102 to transceive eMBB services or MMTC services. This configuration message may be the same as or different than the configuration message for URLLC services.

The eNB 160 may transmit or receive 506 an eMBB signal MMTC signal that may have its reception overridden by a URLLC transmission or have its reception at the eNB 160 interfered with by an URLLC transmission. This may be accomplished as described in connection with Figure 2.

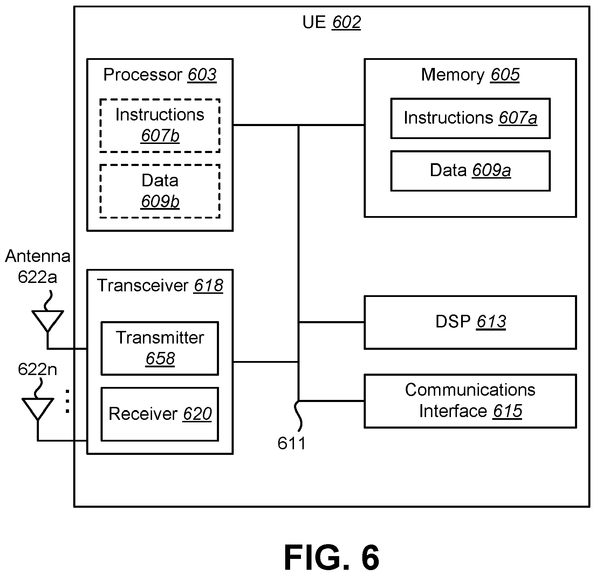

Figure 6 illustrates various components that may be utilized in a UE 602. The UE 602 described in connection with Figure 6 may be implemented in accordance with the UE 102 described in connection with Figure 1. The UE 602 includes a processor 603 that controls operation of the UE 602. The processor 603 may also be referred to as a central processing unit (CPU). Memory 605, which may include read-only memory (ROM), random access memory (RAM), a combination of the two or any type of device that may store information, provides instructions 607a and data 609a to the processor 603. A portion of the memory 605 may also include non-volatile random access memory (NVRAM). Instructions 607b and data 609b may also reside in the processor 603. Instructions 607b and/or data 609b loaded into the processor 603 may also include instructions 607a and/or data 609a from memory 605 that were loaded for execution or processing by the processor 603. The instructions 607b may be executed by the processor 603 to implement one or more of method 200 and 400 described above.

The UE 602 may also include a housing that contains one or more transmitters 658 and one or more receivers 620 to allow transmission and reception of data. The transmitter(s) 658 and receiver(s) 620 may be combined into one or more transceivers 618. One or more antennas 622a-n are attached to the housing and electrically coupled to the transceiver 618.

The various components of the UE 602 are coupled together by a bus system 611, which may include a power bus, a control signal bus and a status signal bus, in addition to a data bus. However, for the sake of clarity, the various buses are illustrated in Figure 6 as the bus system 611. The UE 602 may also include a digital signal processor (DSP) 613 for use in processing signals. The UE 602 may also include a communications interface 615 that provides user access to the functions of the UE 602. The UE 602 illustrated in Figure 6 is a functional block diagram rather than a listing of specific components.

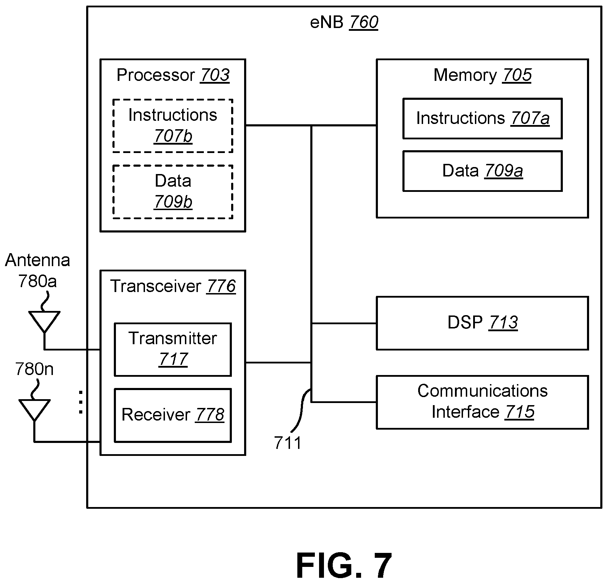

Figure 7 illustrates various components that may be utilized in an eNB 760. The eNB 760 described in connection with Figure 7 may be implemented in accordance with the eNB 160 described in connection with Figure 1. The eNB 760 includes a processor 703 that controls operation of the eNB 760. The processor 703 may also be referred to as a central processing unit (CPU). Memory 705, which may include read-only memory (ROM), random access memory (RAM), a combination of the two or any type of device that may store information, provides instructions 707a and data 709a to the processor 703. A portion of the memory 705 may also include non-volatile random access memory (NVRAM). Instructions 707b and data 709b may also reside in the processor 703. Instructions 707b and/or data 709b loaded into the processor 703 may also include instructions 707a and/or data 709a from memory 705 that were loaded for execution or processing by the processor 703. The instructions 707b may be executed by the processor 703 to implement one or more of method 300 and 500 described above.

The eNB 760 may also include a housing that contains one or more transmitters 717 and one or more receivers 778 to allow transmission and reception of data. The transmitter(s) 717 and receiver(s) 778 may be combined into one or more transceivers 776. One or more antennas 780a-n are attached to the housing and electrically coupled to the transceiver 776.

The various components of the eNB 760 are coupled together by a bus system 711, which may include a power bus, a control signal bus and a status signal bus, in addition to a data bus. However, for the sake of clarity, the various buses are illustrated in Figure 7 as the bus system 711. The eNB 760 may also include a digital signal processor (DSP) 713 for use in processing signals. The eNB 760 may also include a communications interface 715 that provides user access to the functions of the eNB 760. The eNB 760 illustrated in Figure 7 is a functional block diagram rather than a listing of specific components.

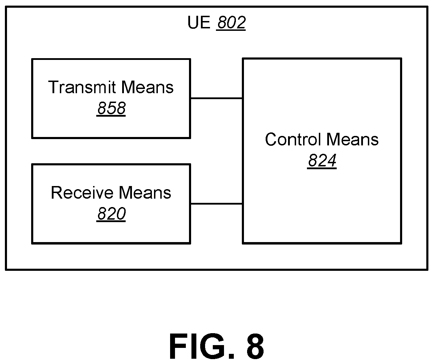

Figure 8 is a block diagram illustrating one implementation of a UE 802 in which systems and methods for transceiving ultra reliable low latency messages amidst delay tolerant transceptions may be implemented. The UE 802 includes transmit means 858, receive means 820 and control means 824. The transmit means 858, receive means 820 and control means 824 may be configured to perform one or more of the functions described in connection with Figure 1 above. Figure 8 above illustrates one example of a concrete apparatus structure of Figure 8. Other various structures may be implemented to realize one or more of the functions of Figure 1. For example, a DSP may be realized by software.

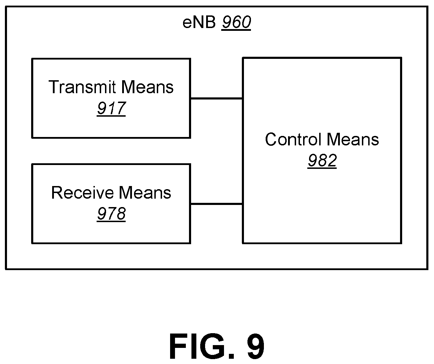

Figure 9 is a block diagram illustrating one implementation of an eNB 960 in which systems and methods for transceiving ultra reliable low latency messages amidst delay tolerant transceptions may be implemented. The eNB 960 includes transmit means 917, receive means 978 and control means 982. The transmit means 917, receive means 978 and control means 982 may be configured to perform one or more of the functions described in connection with Figure 1 above. Figure 9 above illustrates one example of a concrete apparatus structure of Figure 9. Other various structures may be implemented to realize one or more of the functions of Figure 1. For example, a DSP may be realized by software.

The term "computer-readable medium" refers to any available medium that can be accessed by a computer or a processor. The term "computer-readable medium," as used herein, may denote a computer- and/or processor-readable medium that is non-transitory and tangible. By way of example, and not limitation, a computer-readable or processor-readable medium may comprise RAM, ROM, electrically erasable programmable read-only memory (EEPROM), CD-ROM or other optical disk storage, magnetic disk storage or other magnetic storage devices, or any other medium that can be used to carry or store desired program code in the form of instructions or data structures and that can be accessed by a computer or processor. Disk and disc, as used herein, includes compact disc (CD), laser disc, optical disc, digital versatile disc (DVD), floppy disk and Blu-ray^{®} disc where disks usually reproduce data magnetically, while discs reproduce data optically with lasers.

It should be noted that one or more of the methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

Each of the methods disclosed herein comprises one or more steps or actions for achieving the described method. The method steps and/or actions may be interchanged with one another and/or combined into a single step without departing from the scope of the claims. In other words, unless a specific order of steps or actions is required for proper operation of the method that is being described, the order and/or use of specific steps and/or actions may be modified without departing from the scope of the claims.

A program running on the eNB 160 or the UE 102 according to the described systems and methods is a program (a program for causing a computer to operate) that controls a CPU and the like in such a manner as to realize the function according to the described systems and methods. Then, the information that is handled in these apparatuses is temporarily stored in a RAM while being processed. Thereafter, the information is stored in various ROMs or HDDs, and whenever necessary, is read by the CPU to be modified or written. As a recording medium on which the program is stored, among a semiconductor (for example, a ROM, a nonvolatile memory card, and the like), an optical storage medium (for example, a DVD, a MO, a MD, a CD, a BD, and the like), a magnetic storage medium (for example, a magnetic tape, a flexible disk, and the like), and the like, any one may be possible. Furthermore, in some cases, the function according to the described systems and methods described above is realized by running the loaded program, and in addition, the function according to the described systems and methods is realized in conjunction with an operating system or other application programs, based on an instruction from the program.

Furthermore, in a case where the programs are available on the market, the program stored on a portable recording medium can be distributed or the program can be transmitted to a server computer that connects through a network such as the Internet. In this case, a storage device in the server computer also is included. Furthermore, some or all of the eNB 160 and the UE 102 according to the systems and methods described above may be realized as an LSI that is a typical integrated circuit. Each functional block of the eNB 160 and the UE 102 may be individually built into a chip, and some or all functional blocks may be integrated into a chip. Furthermore, a technique of the integrated circuit is not limited to the LSI, and an integrated circuit for the functional block may be realized with a dedicated circuit or a general-purpose processor. Furthermore, if with advances in a semiconductor technology, a technology of an integrated circuit that substitutes for the LSI appears, it is also possible to use an integrated circuit to which the technology applies.

Moreover, each functional block or various features of the base station device and the terminal device used in each of the aforementioned embodiments may be implemented or executed by a circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller or a state machine. The general-purpose processor or each circuit described above may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

## Claims

1. A user equipment, UE, (602), comprising:
a receiver (620) configured to receive information used for configuring locations for time-frequency resources in a downlink; and
a processor (603) configured to perform decoding of a physical downlink shared channel, wherein,
the receiver (620) is configured to receive a signal indicating that transmission to the UE (602) in one or more of the locations for the time-frequency resources is pre-empted with an ultra-reliable low latency communication, URLLC, transmission, the signal being a signal with a radio network temporary identifier, RNTI, defined for the URLLC transmission, the transmission to the UE (602) being an enhanced mobile broadband, eMBB, transmission or a massive machine type communication, MMTC, transmission.

2. A method performed by a user equipment, UE, (602), comprising:
receiving information used for configuring locations for time-frequency resources in a downlink; and
performing decoding of a physical downlink shared channel, further comprising,
receiving a signal indicating that transmission to the UE (602) in one or more of the locations for the time-frequency resources is pre-empted with an ultra-reliable low latency communication, URLLC, transmission, the signal being using a signal with a radio network temporary identifier, RNTI, defined for the URLLC transmission, the transmission to the UE (602) being an enhanced mobile broadband, eMBB, transmission or a massive machine type communication, MMTC, transmission.

3. A base station (760) comprising:
a transmitter (717) configured to transmit, to a user equipment, UE, (602) information used for configuring locations for time-frequency resources in a downlink; and
a processor (703) configured to encode a physical downlink shared channel, wherein,
the transmitter (717) is configured to transmit, to the UE (602), the physical downlink shared channel(s) in the downlink,
the transmitter (717) is configured to transmit a signal indicating that transmission to the UE (602) in one or more of the locations for the time-frequency resources is pre-empted with an ultra-reliable low latency communication, URLLC, transmission, the signal being a signal with a radio network temporary identifier, RNTI, defined for the URLLC transmission, the transmission to the UE (602) being an enhanced mobile broadband, eMBB, transmission or a massive machine type communication, MMTC, transmission.

4. A method performed by a base station (760) comprising:
transmitting, to a user equipment, UE, (602) information used for configuring locations for time-frequency resources in a downlink;
encoding a physical downlink shared channel(s); and
transmitting, to the UE (602), the physical downlink shared channel, further comprising,
transmitting a signal indicating that transmission to the UE (602) in one or more of the locations for the time-frequency resources is pre-empted with an ultra-reliable low latency communication, URLLC, transmission, the signal being using a signal with a radio network temporary identifier, RNTI, defined for the URLLC transmission, the transmission to the UE (602) being an enhanced mobile broadband, eMBB, transmission or a massive machine type communication, MMTC, transmission.

## Patentansprüche

1. Nutzerendgerät, UE (602), aufweisend:
einen Empfänger (620), der dafür konfiguriert ist, Informationen zu empfangen, die zum Konfigurieren von Stellen für Zeitfrequenz-Ressourcen in einem Downlink verwendet werden; und
einen Prozessor (603), der dafür konfiguriert ist, eine Decodierung eines gemeinsam genutzten physikalischen Downlink-Kanals durchzuführen,
wobei
der Empfänger (620) dafür konfiguriert ist, ein Signal zu empfangen, das angibt, dass einer Übertragung zum UE (602) in einer oder mehreren Stellen für die Zeitfrequenz-Ressourcen mit einer Übertragung einer hochzuverlässigen Kommunikation mit niedriger Latenz, URLLC, vorgegriffen wird, wobei es sich bei dem Signal um ein Signal mit einer für die URLLC-Übertragung definierten temporären Funknetz-Identifikationsnummer, RNTI, handelt und bei der Übertragung zum UE (602) um eine Übertragung mit einem erweiterten Mobilfunkbreitband, eMBB, oder eine Übertragung einer Kommunikation vom Massive-Machine-Typ, MMTC, handelt.

2. Verfahren, das von einem Nutzerendgerät, UE (602), durchgeführt wird, aufweisend:
Empfangen von Informationen, die zum Konfigurieren von Stellen für Zeitfrequenz-Ressourcen in einem Downlink verwendet werden; und
Durchführen einer Decodierung eines gemeinsam genutzten physikalischen Downlink-Kanals,
ferner aufweisend
Empfangen eines Signals, das angibt, dass einer Übertragung zum UE (602) in einer oder mehreren Stellen für die Zeitfrequenz-Ressourcen mit einer Übertragung einer hochzuverlässigen Kommunikation mit niedriger Latenz, URLLC, vorgegriffen wird, wobei es sich bei dem Signal um ein Signal mit einer für die URLLC-Übertragung definierten temporären Funknetz-Identifikationsnummer, RNTI, handelt und bei der Übertragung zum UE (602) um eine Übertragung mit einem erweiterten Mobilfunkbreitband, eMBB, oder eine Übertragung einer Kommunikation vom Massive-Machine-Typ, MMTC, handelt.

3. Basisstation (760), aufweisend:
einen Sender (717), der dafür konfiguriert ist, an ein Nutzerendgerät (602) Informationen zu senden, die zum Konfigurieren von Stellen für Zeitfrequenz-Ressourcen in einem Downlink verwendet werden; und
einen Prozessor (703), der dafür konfiguriert ist, einen gemeinsam genutzten physikalischen Downlink-Kanal zu codieren,
wobei
der Sender (717) dafür konfiguriert ist, an das UE (602) den (die) gemeinsam genutzten physikalischen Downlink-Kanal(Kanäle) zu senden,
der Sender (717) dafür konfiguriert ist, ein Signal zu senden, das angibt, dass einer Übertragung zum UE (602) in einer oder mehreren Stellen für die Zeitfrequenz-Ressourcen mit einer Übertragung einer hochzuverlässigen Kommunikation mit niedriger Latenz, URLLC, vorgegriffen wird, wobei es sich bei dem Signal um ein Signal mit einer für die URLLC-Übertragung definierten temporären Funknetz-Identifikationsnummer, RNTI, handelt und bei der Übertragung zum UE (602) um eine Übertragung mit einem erweiterten Mobilfunkbreitband, eMBB, oder eine Übertragung einer Kommunikation vom Massive-Machine-Typ, MMTC, handelt.

4. Verfahren, das von einer Basisstation (760) durchgeführt, aufweisend:
Senden, an ein Nutzerendgerät (602), von Informationen, die zum Konfigurieren von Stellen für Zeitfrequenz-Ressourcen in einem Downlink verwendet werden;
Codieren von einem gemeinsam genutzten physikalischen Downlink-Kanal(Kanälen); und
Senden, an das UE (602), des gemeinsam genutzten physikalischen Downlink-Kanals,
ferner aufweisend
Senden eines Signals, das angibt, dass einer Übertragung zum UE (602) in einer oder mehreren Stellen für die Zeitfrequenz-Ressourcen mit einer Übertragung einer hochzuverlässigen Kommunikation mit niedriger Latenz, URLLC, vorgegriffen wird, wobei es sich bei dem Signal um ein Signal mit einer für die URLLC-Übertragung definierten temporären Funknetz-Identifikationsnummer, RNTI, handelt und bei der Übertragung zum UE (602) um eine Übertragung mit einem erweiterten Mobilfunkbreitband, eMBB, oder eine Übertragung einer Kommunikation vom Massive-Machine-Typ, MMTC, handelt.

## Revendications

1. Équipement utilisateur, UE (602), comprenant :
un récepteur (620) configuré pour recevoir des informations utilisées pour configurer des emplacements pour des ressources temps-fréquence dans une liaison descendante ; et
un processeur (603) configuré pour réaliser un décodage d'un canal partagé de liaison descendante physique,
dans lequel,
le récepteur (620) est configuré pour recevoir un signal indiquant que la transmission à l'UE (602) dans un ou plusieurs des emplacements pour les ressources temps-fréquence est préemptée avec une transmission de communication ultra-fiable à faible latence, URLLC, le signal étant un signal avec un identifiant temporaire de réseau radio, RNTI, défini pour la transmission URLLC, la transmission à l'UE (602) étant une transmission à large bande mobile améliorée, eMBB, ou une transmission de communication de type machine massive, MMTC.

2. Procédé réalisé par un équipement utilisateur, UE, (602), comprenant :
recevoir des informations utilisées pour configurer les emplacements des ressources temps-fréquence dans une liaison descendante ; et
réaliser un décodage d'un canal partagé de liaison descendante physique,
comprenant en outre
recevoir un signal indiquant que la transmission vers l'UE (602) dans un ou plusieurs des emplacements pour les ressources de temps-fréquence est préemptée avec une transmission de communication ultra-fiable à faible latence, URLLC, le signal étant un signal avec un identifiant temporaire de réseau radio, RNTI, défini pour la transmission URLLC, la transmission vers l'UE (602) étant une transmission à large bande mobile améliorée, eMBB, ou une transmission de communication de type machine massive, MMTC.

3. Station de base (760) comprenant :
un émetteur (717) configuré pour transmettre, à un équipement utilisateur, UE, (602) des informations utilisées pour configurer des emplacements pour des ressources temps-fréquence dans une liaison descendante ; et
un processeur (703) configuré pour coder un canal partagé de liaison descendante physique,
dans laquelle,
l'émetteur (717) est configuré pour transmettre, à l'UE (602), le ou les canaux partagés de liaison descendante physiques dans la liaison descendante,
l'émetteur (717) est configuré pour transmettre un signal indiquant que la transmission à l'UE (602) dans un ou plusieurs des emplacements pour les ressources temps-fréquence est préemptée avec une transmission de communication ultra-fiable à faible latence, URLLC, le signal étant un signal avec un identifiant temporaire de réseau radio, RNTI, défini pour la transmission URLLC, la transmission à l'UE (602) étant une transmission à large bande mobile améliorée eMBB, ou une transmission de communication de type machine massive, MMTC.

4. Procédé réalisé par une station de base (760) comprenant :
transmettre, à un équipement utilisateur, UE, (602) des informations utilisées pour configurer des emplacements pour des ressources temps-fréquence dans une liaison descendante ;
coder un ou plusieurs canaux partagés de liaison descendante physiques ; et
transmettre, à l'UE (602), le canal partagé de liaison descendante physique,
comprenant en outre
transmettre un signal indiquant que la transmission à l'UE (602) dans un ou plusieurs des emplacements pour les ressources temps-fréquence est préemptée avec une transmission de communication ultra-fiable à faible latence, URLLC, le signal étant un signal avec un identifiant temporaire de réseau radio, RNTI, défini pour la transmission URLLC, la transmission à l'UE (602) étant une transmission à large bande mobile améliorée, eMBB, ou une transmission de communication de type machine massive, MMTC.
